# EUROPEAN PATENT APPLICATION

(11) **EP 3 407 463 A1**
(43) Date of publication of application: **28.11.2018**
(21) Application number: 17172561.7
(22) Date of filing: 23.05.2017
(51) Int. Cl.: H02J 7/34, H04M 1/00

(54) **ENERGY SUPPLY SYSTEM**

(71) Applicant: Vestel Elektronik Sanayi ve Ticaret A.S., 45030 Manisa (TR)
(72) Inventor: ERASLAN, Oguzhan, 45030 Manisa (TR)
(74) Representative: Ascherl, Andreas

(57) **Abstract**

The present invention provides an energy supply system (100, 200, 300, 400) for a mobile electronic device (150, 450), the energy supply system (100, 200, 300, 400) comprising a detachable main energy storage (101, 201, 301, 401) configured to supply electrical energy during operation of the mobile electronic device (150, 450), and a non-detachable bridge energy storage (102, 402) configured to supply electrical energy for operation of the mobile electronic device (150, 450) during a change of the main energy storage.

## Description

### TECHNICAL FIELD

The invention relates to an energy supply system for a mobile electronic device.

### BACKGROUND

Although applicable to any system that is powered by batteries or any other dischargeable device, the present invention will mainly be described with regard to mobile electronic devices like smartphone.

Mobile electronic devices like e.g. smartphone are usually powered by an internal battery. Such a battery may discharge until the smartphone may not be used anymore and has to be recharged. In such a case the smartphone will typically power down and must be restarted when the battery is charged or exchanged.

Therefore, if a user cannot e.g. reach a power outlet in time his smartphone will power down and a restart will be required.

Accordingly, there is a need for an improved energy management in smartphones.

### SUMMARY OF THE INVENTION

The present invention provides an energy supply system with the features of claim 1.

Therefore it is provided:
An energy supply system for a mobile electronic device, the energy supply system comprising a detachable main energy storage configured to supply electrical energy during operation of the mobile electronic device, and a non-detachable bridge energy storage configured to supply electrical energy for operation of the mobile electronic device during a change of the main energy storage.

The present invention is based on the finding that changing the battery of a mobile electronic device can usually be performed in a short period of time. Therefore the present invention provides the mobile electronic device with two separate energy storages.

The detachable main energy storage provides the electrical energy during normal operation of the mobile electronic device. Normal operation of the mobile electronic device refers to the intended operation or use that the mobile electronic device is designed for. Such an intended use may e.g. comprise making calls with a smartphone, watching videos with a smartphone or a tablet pc, or the like.

In addition, the bridge energy storage provides electrical energy for operation of the mobile electronic device only during the short period of time that is needed to exchange a depleted detachable main energy storage for a charged detachable main energy storage.

Normally, a user will not perform any high processing load tasks while performing a change of the battery of the mobile electronic device. Instead, the user will try to quickly change the battery of the mobile electronic device. Therefore the bridge energy storage may e.g. provide a reduced amount of energy that is required for the time that it takes to change the battery of the mobile electronic device.

With the energy supply system of the present invention the user may therefore change the detachable main energy storage of the mobile electronic device without a shut-down and reboot of the mobile electronic device. Therefore, the invention increases the operating time of the mobile electronic device and at the same time spares the user a reboot after changing the detachable main energy storage.

The user may therefore resume using the mobile electronic device exactly in the state in which the mobile electronic device was, when the user removed the detachable main energy storage without delay.

Further embodiments of the present invention are subject of the further subclaims and of the following description, referring to the drawings.

In an embodiment, the detachable main energy storage may comprise a battery, and the bridge energy storage may comprise a battery or a capacitor.

The detachable main energy storage may e.g. be a battery, e.g. a Lithium-Ion Battery, or the like. Such batteries provide high capacities per volume and therefore allow operating the mobile electronic device for a long period without interruption. The detachable main energy storage may e.g. be a battery that is attached to the back of the mobile electronic device. Therefore, the detachable main energy storage may cover most of the back surface of the mobile electronic device and the available space may be exploited in its full capacity.

The bridge energy storage is required to provide electrical energy only for a short amount of time, i.e. during a change of the detachable main energy storage. The bridge energy storage may also comprise a battery. However, in view of the short time that the bridge energy storage is needed, the bridge energy storage may also comprise capacitors, like e.g. super- or ultra-capacitors. The use of capacitors has the advantage that these may e.g. be directly soldered onto a PCB of the mobile electronic device.

In another embodiment, the capacity of the detachable main energy storage may be larger than the capacity of the bridge energy storage.

The detachable main energy storage provides the electrical energy during normal operation of the mobile electronic device. In e.g. a smartphone such an operation may include tasks like rendering a 3D game or displaying streaming videos. Since such tasks require high processing power the detachable main energy storage must provide an increased amount of electrical energy and requires high capacity.

As explained above, the time it takes to change the detachable main energy storage of the mobile electronic device is rather short. Therefore the electrical capacity, i.e. the amount of electrical energy stored in the bridge energy storage, may be rather small. The actual capacity of the mobile electronic device may vary between manufacturers but may e.g. be dimensioned such that the mobile electronic device may be kept operational for about one minute or the like.

In an embodiment, the energy supply system may comprise a housing with a detachable fixation mechanism configured to detachably fix and electrically contact the detachable main energy storage in the housing.

Many modern mobile electronic device, like e.g. smartphones comprise the battery inside of a housing and require opening the housing to exchange the battery. While the present invention is perfectly applicable to such mobile electronic device, providing the housing with the detachable fixation mechanism greatly simplifies the process of changing the detachable main energy storage. Therefore, changing the detachable main energy storage is accelerated and the capacity of the bridge energy storage may be dimensioned for a shorter amount of time.

In a further embodiment, the detachable fixation mechanism may comprise guide rails and the detachable main energy storage may comprise a counter surface for the guide rails that is configured to slide the detachable main energy storage in the guide rails.

Guide rails in the housing and the respective counter surface(s) on the detachable main energy storage allow easily sliding in and out the detachable main energy storage from/into the housing. Therefore, a quick exchange of the detachable main energy storage is supported.

In another embodiment, the detachable fixation mechanism may comprise at least one retractable protrusion and the detachable main energy storage may comprise corresponding recesses. As an alternative the detachable main energy storage may comprise at least one retractable protrusion and the detachable fixation mechanism may comprise corresponding recesses.

The protrusions may e.g. be mechanically arranged such that they are pushed back by the detachable main energy storage, when the detachable main energy storage is inserted into the housing of the mobile electronic device. When the detachable main energy storage reaches its end position or operating position, the protrusions may spring-loaded automatically engage in the recesses. For releasing the detachable main energy storage, the protrusions may then manually be retracted e.g. by the user. Such a mechanism allows quickly pivoting the detachable main energy storage out of the housing and therefore also supports a quick change of the detachable main energy storage.

In an embodiment, the energy supply system may comprise an energy control unit configured to provide electrical power for operation of the mobile electronic device from the detachable main energy storage while the detachable main energy storage is electrically connected to the mobile electronic device.

The energy control unit may e.g. comprise a power controller or battery controller that performs the power management in the mobile electronic device. Such a power management device may detect the state of the power supply, i.e. the detachable main energy storage and the bridge energy storage, and power the mobile electronic device exclusively from the detachable main energy storage while the detachable main energy storage is available.

With this arrangement the bridge energy storage is not discharged during normal operation of the mobile electronic device. The capacity of the bridge energy storage will therefore be fully available when the detachable main energy storage is removed.

In an embodiment, the energy control unit may be configured to provide electrical power for operation of the mobile electronic device from the bridge energy storage while the detachable main energy storage is not electrically connected to the mobile electronic device.

With the help of the electrical energy provided by the bridge energy storage, the energy control unit may keep the mobile electronic device in an operational state, even when the detachable main energy storage is removed.

In a further embodiment, the energy control unit may be configured to detect the electrical connection status of the detachable main energy storage and set the mobile electronic device to an energy saving operation mode if the detachable main energy storage is not connected to the energy control unit.

The energy saving operation mode may reduce the energy consumption of the mobile electronic device to an absolute minimum that is required not to shut down the mobile electronic device completely.

If the energy consumption of the mobile electronic device is reduced while the detachable main energy storage is removed from the mobile electronic device, the required electrical energy for this state may also be reduced. Therefore, the capacity and therefore the size of the bridge energy storage may be reduced.

In an embodiment, the energy saving operation mode may be an operation mode that allows returning the mobile electronic device to a fully operational state or a full operation mode without rebooting the mobile electronic device.

The energy saving operation mode may e.g. reduce the core frequency of a processor of the mobile electronic device or even halt the processor. A processor may e.g. be slowed down or halted and may then resume its operation without flaws, if e.g. the contents of the processor registers and the memory are preserved.

The energy saving operation mode will therefore at least preserve the content of the registers and a memory of the mobile electronic device that is necessary to return the processor to the operational state without a reboot.

With this power saving mechanism activated while the detachable main energy storage is removed from the mobile electronic device, the energy consumption of the mobile electronic device may further be reduced and the required capacity for the bridge energy storage may also be reduced.

In another embodiment, the energy saving operation mode may comprise turning off a display of the mobile electronic device.

Usually the displays of mobile electronic devices and especially the backlights of the displays are along with the processor the devices that consume the most electrical energy in a mobile electronic device.

Turning off the display or at least a backlight of the display therefore drastically reduces the energy consumption in the mobile electronic device. The required capacity for the bridge energy storage may therefore further be reduced.

In an embodiment, the energy control unit may be configured to charge the bridge energy storage while the detachable main energy storage is connected to the mobile electronic device.

The energy control unit may permanently keep the bridge energy storage fully charged or at the optimum charging level, while the detachable main energy storage is available. This ensures that the maximum capacity of the bridge energy storage is available when the detachable main energy storage is removed.

In an embodiment, the energy control unit may be configured to keep the bridge energy storage charged at an optimum charging state and only charge the bridge energy storage to the maximum capacity when the remaining energy in the detachable main energy storage falls below a predetermined level.

Usually, battery life may be maximized if a battery is neither fully charged nor fully discharged. The optimum charging level may e.g. be at about 80% of the batteries full capacity.

Therefore, especially with a battery as bridge energy storage, the life of the bridge energy storage may be maximized if the charge is usually kept at that optimum level.

When the charge level of the detachable main energy storage falls below a predetermined threshold, e.g. 15%, 10% or 5%, the chances are high that energy from the bridge energy storage will be needed soon. Therefore, in that situation the bridge energy storage may be fully charged.

In a further embodiment, the energy supply system may comprise a connector configured to connect the energy supply system to an external energy supply for charging the detachable main energy storage and/or the bridge energy storage.

The connector allows charging the mobile electronic device as usual. This means the energy control unit may e.g. comprise a charging controller and charge the detachable main energy storage with electrical energy that is received e.g. from the external power supply.

It is understood, that the energy supply system may be provided with more than one detachable main energy storage and e.g. with an external charging station that allows charging a detachable main energy storage that is at the moment not used in the mobile electronic device for future use.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an energy supply system according to the present invention;
Fig. 2 shows a schematic view of another embodiment of an energy supply system according to the present invention;
Fig. 3 shows a schematic view of another embodiment of an energy supply system according to the present invention; and
Fig. 4 shows a block diagram of another embodiment of an energy supply system according to the present invention.

In the figures like reference signs denote like elements unless stated otherwise.

### DETAILED DESCRIPTION OF THE DRAWINGS

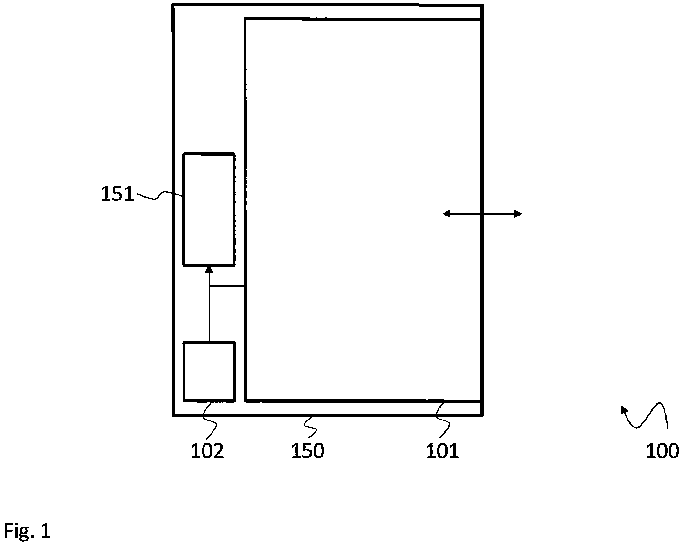

Fig. 1 shows a block diagram of an embodiment of an energy supply system 100. The energy supply system 100 is provided for a mobile electronic device 150 and comprises a detachable main energy storage 101. In addition the energy supply system 100 comprises a non-detachable bridge energy storage 102. The detachable main energy storage 101 and the bridge energy storage 102 are both electrically coupled to electronic components 151 of the mobile electronic device 150. The mobile electronic device 150 may e.g. be a smartphone or tablet pc or the like and the energy supply system 100 is provided to supply the mobile electronic device 150 with electrical energy, especially during a change of the detachable main energy storage 101. In Fig. 1 the "detachable" property of the detachable main energy storage 101 is hinted at by a two headed arrow that may indicate that the detachable main energy storage 101 may slide out of the mobile electronic device 150. However, the invention is not limited to a sliding mechanism for the detachable main energy storage 101 and any other detaching mechanism may be used with the present invention.

The energy supply system 100 will supply electrical energy for the operation of the mobile electronic device 150, i.e. the electronic components 151, from the detachable main energy storage 101 as long as the detachable main energy storage 101 is present in the mobile electronic device 150.

As soon as the detachable main energy storage 101 is removed, the energy supply system 100 will supply electrical energy for the mobile electronic device 150 for a limited time from the bridge energy storage 102. This will allow the user to place a new or charged detachable main energy storage 101 in the mobile electronic device 150 without shutting down or restarting the mobile electronic device 150.

The detachable main energy storage 101 may e.g. comprises a battery or a fuel cell or the like, wherein the bridge energy storage 102 may comprise a battery or a capacitor. The capacity of the detachable main energy storage 101 may further be larger than the capacity of the bridge energy storage 102.

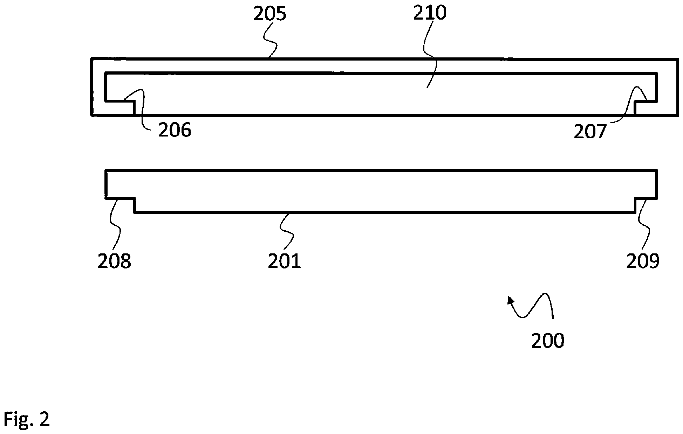

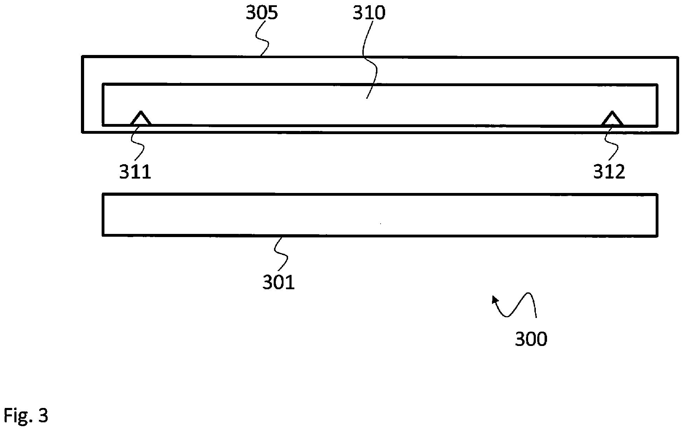

Although not explicitly referenced, it is understood that the mobile electronic device 150 or the energy supply system 100 may e.g. comprise a housing. The housing and possible interactions of the housing with the detachable main energy storage 101 will be explained below in conjunction with Figs. 2 and 3.

Fig. 2 shows a schematic side view of an energy supply system 200. The energy supply system 200 comprises a housing 205, which may also be the housing of the mobile electronic device 150. In the housing 205 an opening or recess 210 is provided that may accommodate the detachable main energy storage 201. The housing 205 comprises two guide rails 206, 207 or guides that frame the recess 210. At the same time, the detachable main energy storage 201 comprises respective counter surfaces 208, 209 that serve for sliding the detachable main energy storage 201 into the recess 210. The recess further opens the back side of the housing 205. Therefore the back side of the detachable main energy storage 201 will form the back side of the housing 205.

Although not explicitly shown, it is understood that electrical contacts may be provided in the housing 205 for electrically contacting the detachable main energy storage 201. In addition, it is understood that fixation elements like e.g. clamps or the like may be provided to fix the detachable main energy storage 201 in position when it is inserted into the housing 205. The same applies for the arrangement of Fig. 3.

Fig. 3 shows a schematic side view of another energy supply system 300. The energy supply system 300 also comprises a housing 305 with a recess 310. In contrast to the housing 205 the housing 305 comprises a closed recess 310. This means that the back side of the housing 305 is closed and that the detachable main energy storage 301 slides into the housing 305 through an opening on the side without being visible from the back of the housing 305.

In the recess 310 two protrusions 311, 312 are shown that may e.g. be spring-loaded. When the detachable main energy storage 301 is inserted, the protrusions 311, 312 may be pushed down to automatically engage with respective recesses in the detachable main energy storage 301 (not visible in the side view). The protrusions 311, 312 may e.g. comprise a manual actuator that may be actuated by a user to release the detachable main energy storage 301. As an alternative a push-open mechanism may be provided that automatically releases the detachable main energy storage 301 when it is pushed into the housing 305 by the user.

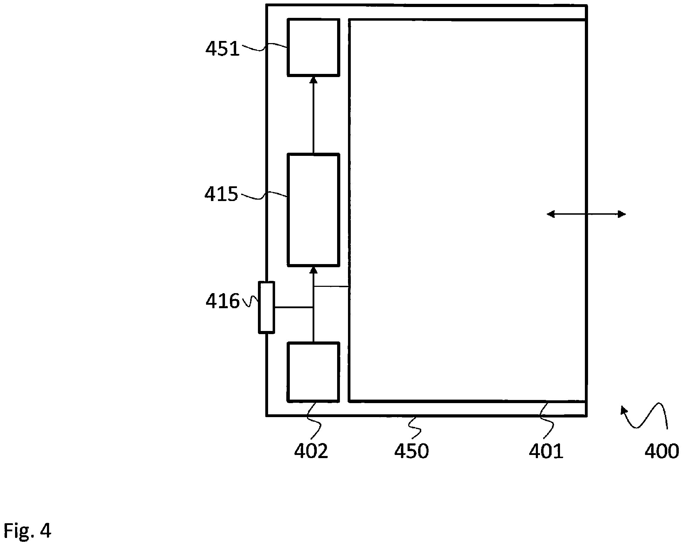

Fig. 4 shows a block diagram of another energy supply system 400. The energy supply system 400 is based on the energy supply system 100 and also comprises a detachable main energy storage 401 and a non-detachable bridge energy storage 402. In addition, the energy supply system 400 comprises an energy control unit 415 that is electrically connected to the detachable main energy storage 401, the bridge energy storage 402 and an additional connector 416. The connector 416 serves to connect the energy supply system 400 e.g. to a power supply for internally charging the detachable main energy storage 401 and/or the bridge energy storage 402.

The energy control unit 415 may provide electrical power for operation of the mobile electronic device 450 from the detachable main energy storage 401 while the detachable main energy storage 401 is in the mobile electronic device 450. When the detachable main energy storage 401 is removed e.g. by the user, the energy control unit 415 may provide electrical power for operation of the mobile electronic device 450 from the bridge energy storage 402.

The energy control unit 415 may further detect the electrical connection status of the detachable main energy storage 401 and set the mobile electronic device 450, i.e. the electronic components 451, to an energy saving operation mode if the detachable main energy storage 401 is not connected to the energy control unit 415. The energy saving operation mode may e.g. be an operation mode that allows returning the mobile electronic device 450 to a fully operational state without rebooting the mobile electronic device 450. The energy saving operation mode may for example comprises turning off a display of the mobile electronic device 450.

The energy control unit 415 may charge the bridge energy storage 402 while the detachable main energy storage 401 is connected to the mobile electronic device 450 to keep the bridge energy storage 402 charged in case it is needed. In this regard, the energy control unit 415 may keep the bridge energy storage 402 charged at an optimum charging state and only charge the bridge energy storage 402 to the maximum capacity when the remaining energy in the detachable main energy storage 401 falls below a predetermined level.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus the present invention provides an energy supply system 100, 200, 300, 400 for a mobile electronic device 150, 450, the energy supply system 100, 200, 300, 400 comprising a detachable main energy storage 101, 201, 301, 401 configured to supply electrical energy during operation of the mobile electronic device 150, 450, and a non-detachable bridge energy storage 102, 402 configured to supply electrical energy for operation of the mobile electronic device 150, 450 during a change of the main energy storage.

### List of reference signs

- 100, 200, 300, 400: energy supply system
- 101, 201, 301, 401: detachable main energy storage
- 102, 402: bridge energy storage
- 205: housing
- 206, 207: guide rails
- 208, 209: counter surface
- 210, 310: recess
- 311, 312: protrusion
- 415: energy control unit
- 416: connector
- 150, 450: mobile electronic device
- 151, 451: electronic components

## Claims

1. Energy supply system (100, 200, 300, 400) for a mobile electronic device (150, 450), the energy supply system (100, 200, 300, 400) comprising:
a detachable main energy storage (101, 201, 301, 401) configured to supply electrical energy during operation of the mobile electronic device (150, 450), and
a non-detachable bridge energy storage (102, 402) configured to supply electrical energy for operation of the mobile electronic device (150, 450) during a change of the main energy storage.

2. Energy supply system (100, 200, 300, 400) according to claim 1, wherein the detachable main energy storage (101, 201, 301, 401) comprises a battery, and wherein the bridge energy storage (102, 402) comprises a battery or a capacitor.

3. Energy supply system (100, 200, 300, 400) according to any one of the preceding claims, wherein the capacity of the detachable main energy storage (101, 201, 301, 401) is larger than the capacity of the bridge energy storage (102, 402).

4. Energy supply system (100, 200, 300, 400) according to any one of the preceding claims, comprising a housing (205) with a detachable fixation mechanism configured to detachably fix and electrically contact the detachable main energy storage (101, 201, 301, 401) in the housing (205).

5. Energy supply system (100, 200, 300, 400) according to claim 4, wherein the detachable fixation mechanism comprises guide rails (206, 207) and wherein the detachable main energy storage (101, 201, 301, 401) comprises a counter surface (208, 209) for the guide rails (206, 207) that is configured to slide the detachable main energy storage (101, 201, 301, 401) in the guide rails (206, 207).

6. Energy supply system (100, 200, 300, 400) according to claim 4, wherein the detachable fixation mechanism comprises at least one retractable protrusion (311, 312) and the detachable main energy storage (101, 201, 301, 401) comprises corresponding recesses, or wherein the detachable main energy storage (101, 201, 301, 401) comprises at least one retractable protrusion (311, 312) and the detachable fixation mechanism comprises corresponding recesses.

7. Energy supply system (100, 200, 300, 400) according to any one of the preceding claims, comprising an energy control unit (415) configured to provide electrical power for operation of the mobile electronic device (150, 450) from the detachable main energy storage (101, 201, 301, 401) while the detachable main energy storage (101, 201, 301, 401) is electrically connected to the mobile electronic device (150, 450).

8. Energy supply system (100, 200, 300, 400) according to claim 7, wherein the energy control unit (415) is configured to provide electrical power for operation of the mobile electronic device (150, 450) from the bridge energy storage (102, 402) while the detachable main energy storage (101, 201, 301, 401) is not electrically connected to the mobile electronic device (150, 450).

9. Energy supply system (100, 200, 300, 400) according to claim 8, wherein the energy control unit (415) is configured to detect the electrical connection status of the detachable main energy storage (101, 201, 301, 401) and set the mobile electronic device (150, 450) to an energy saving operation mode if the detachable main energy storage (101, 201, 301, 401) is not connected to the energy control unit (415).

10. Energy supply system (100, 200, 300, 400) according to claim 9, wherein the energy saving operation mode is an operation mode that allows returning the mobile electronic device (150, 450) to a fully operational state without rebooting the mobile electronic device (150, 450).

11. Energy supply system (100, 200, 300, 400) according to any one of the preceding claims 9 and 10, wherein the energy saving operation mode comprises turning off a display of the mobile electronic device (150, 450).

12. Energy supply system (100, 200, 300, 400) according to any one of the preceding claims 7 to 11, wherein the energy control unit (415) is configured to charge the bridge energy storage (102, 402) while the detachable main energy storage (101, 201, 301, 401) is connected to the mobile electronic device (150, 450).

13. Energy supply system (100, 200, 300, 400) according to claim 12, wherein the energy control unit (415) is configured to keep the bridge energy storage (102, 402) charged at an optimum charging state and only charge the bridge energy storage (102, 402) to the maximum capacity when the remaining energy in the detachable main energy storage (101, 201, 301, 401) falls below a predetermined level.

14. Energy supply system (100, 200, 300, 400) according to any one of the preceding claims, comprising a connector (416) configured to connect the energy supply system (100, 200, 300, 400) to an external energy supply for charging the detachable main energy storage (101, 201, 301, 401) and/or the bridge energy storage (102, 402).
